# EUROPEAN PATENT SPECIFICATION

(11) **EP 1 176 741 B1**
(45) Date of publication and mention of the grant of the patent: **14.03.2007**
(21) Application number: 01306125.4
(22) Date of filing: 17.07.2001
(51) Int. Cl.: H04B 10/10, G02B 6/35

(54) **Optical communication device and its control method**
Optische Kommunikationseinrichtung und ihr Steuerungsverfahren
Dispositif de communication optique et sa méthode de contrôle

(30) Priority: 27.07.2000 JP 2000227380
(43) Date of publication of application: 30.01.2002
(73) Proprietor: SEIKO INSTRUMENTS INC., Chiba-shi, Chiba (JP)
(72) Inventor: Yamanaka, Takashi, c/o Seiko Instruments Inc., Chiba-shi, Chiba (JP); Kasuga, Masao, c/o Seiko Instruments Inc., Chiba-shi, Chiba (JP); Iino, Akihiro, c/o Seiko Instruments Inc., Chiba-shi, Chiba (JP); Suzuki, Kenji, c/o Seiko Instruments Inc., Chiba-shi, Chiba (JP); Shimada, Tomohiro, c/o Seiko Instruments Inc., Chiba-shi, Chiba (JP)
(74) Representative: Sturt, Clifford Mark

(56) References cited:
- EP-A- 0 991 152
- US-A- 6 094 293

## Description

The present invention relates to an optical communication device used in an optical network of e.g., a high density light wavelength multiplex system, and more particularly relates to a compact multifunctional optical communication device.

In recent years, a communication transfer system tends to be switched to a system using an optical fiber as the Internet, etc. have rapidly spread. Further, a WDM (Wavelength Division Multiplexing) transmission system using optical multiplex conversion tends to be adopted so as to further increase the density of a transmission capacity. An optical control communication module for synthesizing/dividing, switching and damping an optical signal different in wavelength, etc. is indispensable to the adoption of the WDM system.

For example, there are light wavelength variable filters disclosed in Japanese Patent Laid-Open Nos. 257068/1993, 281480/1993 and 198936/1995 as a conventional optical control communication module.

However, with respect to a filter main body used in these light wavelength variable filters, one filter has a light transmitting distribution and a transmitting wavelength is switched by sliding the filter main body with respect to a light beam. Accordingly, productivity of the filter main body is low and it takes cost. Further, when the wavelength is greatly different in the switching of the transmitting wavelength, a slide distance of the filter is lengthened so that response becomes worse. Further, it is not easy to make the filter main body compact since the filter main body has a size to a certain extent.

Further, each optical control communication module has a single function. Therefore, when it is necessary for the optical communication device to have plural functions, it is necessary to use plural optical control communication modules. Namely, the optical communication device is large-sized.

European patent application EP 0 991 152 A2, published on April 5th 2000, describes an optical filter for use in an optical amplifier. In one form of the optical filter three optical filters are disposed in series in the path of a light beam, the filters being arranged to reflect the light beam into the following filter. The filters each consist of an attenuating part and a non-attenuating part and are separately controllable, such that one or more of the filters can be displaced so that their attenuating parts are more or less in the path of the incident light beam.

In US 6,094,293, issued on 25th July 2000, an optical switching apparatus is described, in which a number of optical switches are arranged in a potentially interrupting position of an incident light beam. The switches are allowed to assume either of two states: a first state, in which they reflect the light by means of a mirror attached to each switch, and a second state, in which they allow the light to pass unhindered and unmodified by moving the mirror out of the way of the light beam. Selective control of the states of the switches allows the incident light beam to take a number of different paths by selective reflection from the mirrors of the various switches.

An object of the present invention is to provide a compact multifunctional optical communication device having good response, and a control method of this optical communication device.

To solve the above problem, an optical communication device in the present invention comprises an optical system for propagating a light beam through a space; a plurality of optical elements movable to an interrupting position of the light beam within the space, and arranged in a series direction with the light beam; driving means for separately driving these optical elements; and driving control means for controlling an operation of this driving means, characterised in that at least two different kinds of optical elements are arranged as the optical elements, and the optical elements are arranged on alternate sides of a path to be traversed by the light beam. Accordingly, the optical communication device can be made compact by arranging the optical elements in series and alternately with the light beam.

Here, for example, the optical communication device may be a Switch, Splitter, Combiler, Attenuator, Isolator, Shutter, Terminator, Demultiplexer, Multiplexer, or Add-drop-module.

Also, the optical communication device may include the term Optical, Wavelength, and Polarisation before the above-mentioned devices' name (for example, Wavelength Switch, Wavelength Splitter, Wavelength Combiler, Optical Attenuator, Optical Isolator, Optical shutter, Optical Terminator, Optical Demultiplexer, Optical multiplexer, Optical Add-drop-module, etc).

Moreover the optical communication device may include the combination of single function devices above.

Further, for example, the optical element may include an optical filter constructed by a dielectric multilayer film, a lens, a prism, a reflecting plate etc.

Since, two kinds or more of optical elements are provided, the optical communication device can be set to be multifunctional, while compactness is maintained.

Further, when two kinds or more of optical elements having different wavelength transmitting characteristics are included, light of a predetermined desirable wavelength can be transmitted by switching the optical elements arranged in an interrupting position of the light beam. Further, when two kinds or more of optical elements having different wavelength absorption characteristics are included, the light of a predetermined desirable wavelength can be absorbed by switching the optical elements arranged in the interrupting position of the light beam. Namely, the function of an optical filter can be provided to make a wavelength selection in the optical communication device by using such constructions.

When two kinds or more of optical elements having different transmitting light amount characteristics are included, a transmitting light amount can be adjusted by switching the optical elements arranged in the interrupting position of the light beam. Namely, the optical communication device can have a function for adjusting the transmitting light amount.

Further, when an optical element having optical path converting characteristics such as a prism, a mirror, etc., is included together with other optical elements (e.g., each of the above optical elements), an optical path can be converted to a predetermined desirable direction by changing an angle of the optical element having the optical path converting characteristics. Namely, the optical communication device can also have a function for converting the optical path.

Further, the optical communication device can have a backup function by further arranging one or more optical elements having the same optical characteristics as at least one of the kinds of optical parts.

When plural driving means are arranged, it is necessary to widen a clearance of the optical elements such that front and rear optical elements and the driving means do not interfere with each other. However, when front and rear driving means with respect to the light beam are arranged in a zigzag shape between the same optical parts, the clearance of the optical parts can be narrowed. Namely, the optical communication device can be made further compact.

In this case, productivity at an assembly time is improved when moving optical members are obtained by assembling the driving means into the optical elements are arranged such that the driving means is located between the same optical elements through the light beam.

For example, a piezoelectric actuator may be used as the driving means. In this case, the driving means becomes compact and has high torque when a piezoelectric body for generating a stretching vibration, and a moving body frictionally driven by the stretching vibration generated by this piezoelectric body are provided. Therefore, the optical communication device can be made further compact. More concretely, piezoelectric actuators of a rotating type and a direct acting type are used.

When the driving means is the piezoelectric actuator, the following construction can be used.

First, the control means may be constructed such that a preliminary signal is inputted to this control means before the driving. In this case, since the piezoelectric actuator is warmed up by the preliminary signal and has good response, response of the optical communication device can be improved.

Further, when the control means has a self-excited oscillating circuit, the piezoelectric actuator can be more efficiently driven.

Further, when a supporting member for movably supporting the optical element is provided and the control means is arranged in this supporting member, space is effectively utilised and the optical communication device can be made more compact.

Further, when it is controlled in the above optical communication device such that the plural optical elements are simultaneously driven, a time required to switch the optical elements can be shortened. Namely, response of the optical communication device can be improved.

Embodiments of the present invention will now be described by way of further example only and with reference to the accompanying drawings, in which:
Fig. 1 is a block diagram showing the construction of an optical communication device in a first embodiment mode of the present invention;
Fig. 2A is a sectional schematic view of the optical communication device of Fig. 1, and Fig. 2B is a schematic plan view of this optical communication device;
Fig. 3 is a view for explaining the function of an optical filter as an optical element of Fig. 1;
Fig. 4 is a block diagram showing the construction of a moving optical member of Fig. 1;
Fig. 5 is a block diagram showing one example of a driving circuit of Fig. 1;
Fig. 6 is a view showing a main portion of an optical communication device in a second embodiment mode of the present invention;
Fig. 7 is a view showing the construction of an optical communication device, wherein Fig. 7A is a sectional schematic view of this construction, and Fig. 7B is a schematic plan view of this construction;
Fig. 8 is a view showing the construction of an optical communication device in a third embodiment mode of the present invention wherein Fig. 8A is a sectional schematic view of this construction, and Fig. 8B is a schematic plan view of this construction;
Fig. 9 is a view showing the construction of an optical communication device, wherein Fig. 9A is a front view showing a main portion of this construction, and Fig. 9B is a plan view of this construction.

### Embodiment 1

The schematic construction of an optical communication device in the present invention will first be explained by using block diagrams.

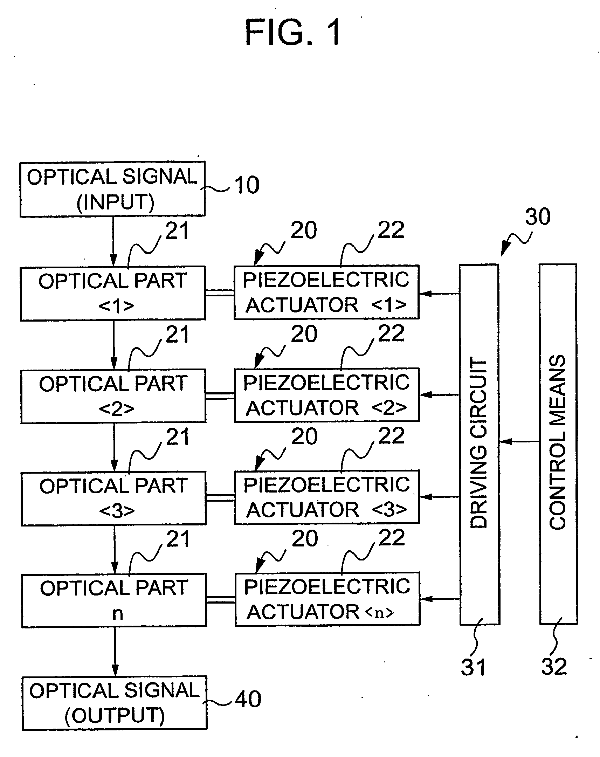

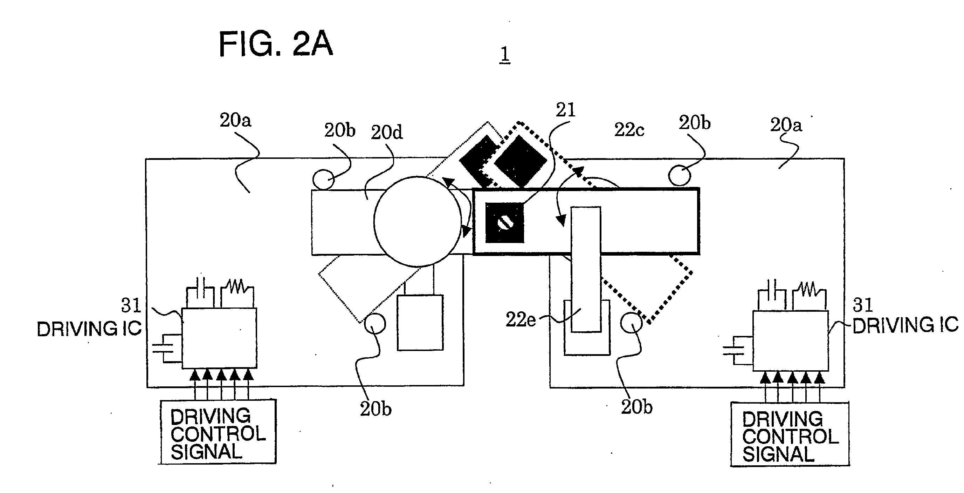

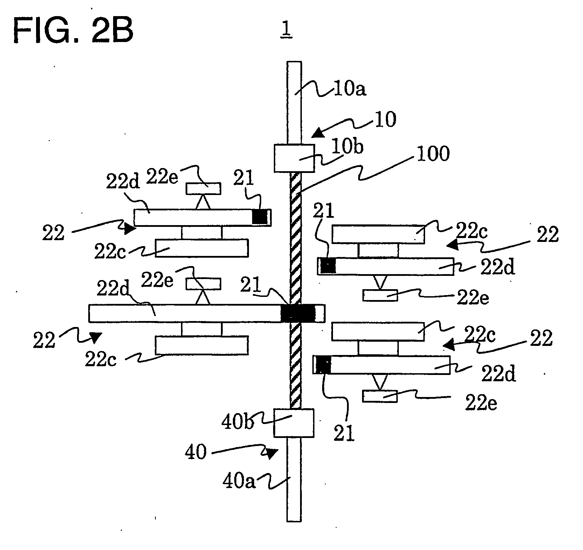

As shown in Figs. 1 and 2A and 2B, an optical communication device 1 is schematically constructed by an input section 10 for inputting an optical signal, plural moving optical members 20 for controlling the optical signal inputted from the input section 10, a driving control means 30 for controlling an operation of each moving optical member 20, and an output section 40 for outputting the optical signal. Namely, in the optical communication device 1, the optical signal inputted from the input section 10 is controlled by the moving optical member 20, and is then outputted from the output section 40.

As shown in Fig. 2B, the moving optical members 20 are arranged in series and alternately with respect to a light beam 100 between the input section 10 and the output section 40.

As shown in Fig. 2B, the input section 10 has an optical fiber 10a and a lens 10b. The output section 40 similarly has an optical fiber 40a and a lens 40b. Thus, parallel a light beam 100 can be obtained between the input section 10 and the output section 40. Means for taking parallel the light beam 100 is not limited to the above. For example, a method for taking parallel a light beam may be also used by the optical fiber 40a, 40b which have a special worked side surface kind of aspherical for outputting a parallel light optical signal.

The moving optical member 20 is constructed by an optical element 21 and a piezoelectric actuator 22, and controls the optical signal by moving the optical element 21 by the piezoelectric actuator 22 until an interrupting position of the optical signal, or separating the optical element 21 from the interrupting position. As shown in Fig. 2A, the moving optical member 20 is attached to a side face of a supporting member 20a (not shown in Fig. 2B).

As shown in Fig. 2B, the side face of the supporting member 20a on an attaching side of the moving optical member 20 is univocally determined in accordance with on which side the moving optical member 20 is located with respect to the light beam 100. This side face of the supporting member 20a is opposed through the light beam 100. Thus, it is possible to narrow a required interval for arranging the moving optical member 20.

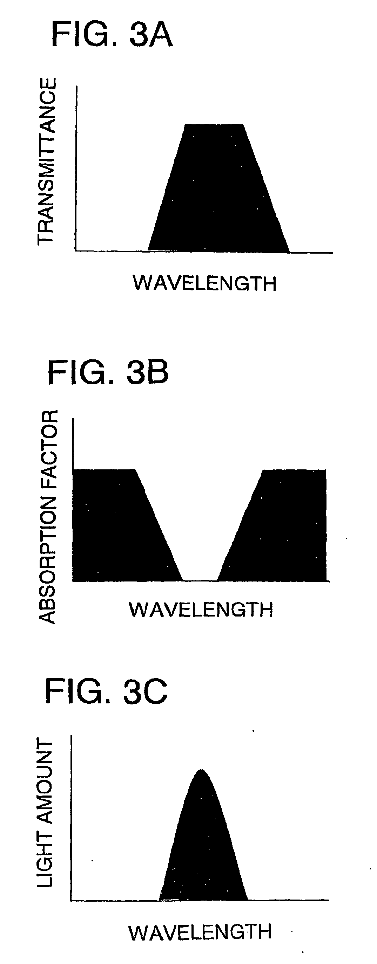

An optical filter for transmitting light of a specific wavelength (see Fig. 3A), an optical filter for absorbing light of a specific wavelength (see Fig. 3B), an optical filter for adjusting a transmitting light amount (see Fig. 3C), etc., are considered as the optical element 21, and the optical element 21 is constructed by a dielectric multilayer film.

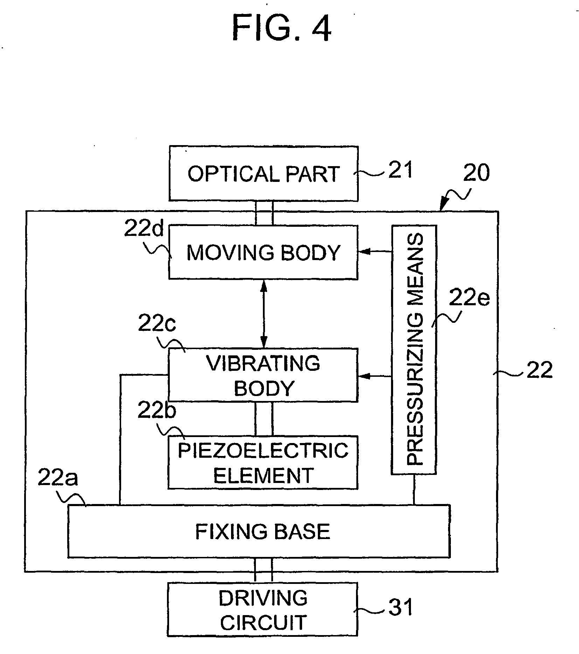

For example, the piezoelectric actuator 22 is a piezoelectric actuator of a rotating type. As illustrated in Figures. 2 and 4, the piezoelectric actuator 22 is schematically constructed by a piezoelectric element 22b on a disc fixed onto a fixing base 22a, a vibrating body 22c arranged integrally with the piezoelectric element 22b, a moving body 22d mounted onto the vibrating body 22c, and a pressurising means 22e for securing contact pressure of the vibrating body 22c and the moving body 22d. A bending vibration caused on an upper face of the piezoelectric element 22b is amplified by the vibrating body 22c, and is outputted as driving force from an unillustrated projection on the vibrating body 22c to the moving body 22d. The moving body 22d fixedly holds the optical element at its one end.

The moving body 22d of the piezoelectric actuator 22 is an integral object having a bar shape, and is rotated with a portion of the moving body 22d near its center as a rotating shaft. The moving body in the present invention may be also constructed by plural members in accordance with uses.

Two projections 20b are arranged on a side face of the supporting member 20a such that these projections 20b nip the other end of the moving body 22d on a rotating circular circumference at this other end. Namely, a rotating range of the moving body 22d is limited by the two projections 20b. One of the two projections 20b is arranged such that the optical element 21 arranged at one end of the moving body 22d is located in an interrupting place of the light beam 200 near a side end of the supporting member 20a. The other of the projections 20b is arranged such that the moving body 22d and the optical element 21 are located in escaping positions as places not interfering with the light beam 100. Primary moment of the moving body 22d can be reduced by this structure.

Namely, all the moving optical members 20 have the same construction except for the optical element 21 so that productivity is increased. Further, all driving rotation directions in an interrupting case of the light beam are the same direction so that a control system using the driving control means 30 is simplified.

As shown in Fig. 1, the driving control means 30 is constructed by e.g., a driving circuit 31 and a control means 32.

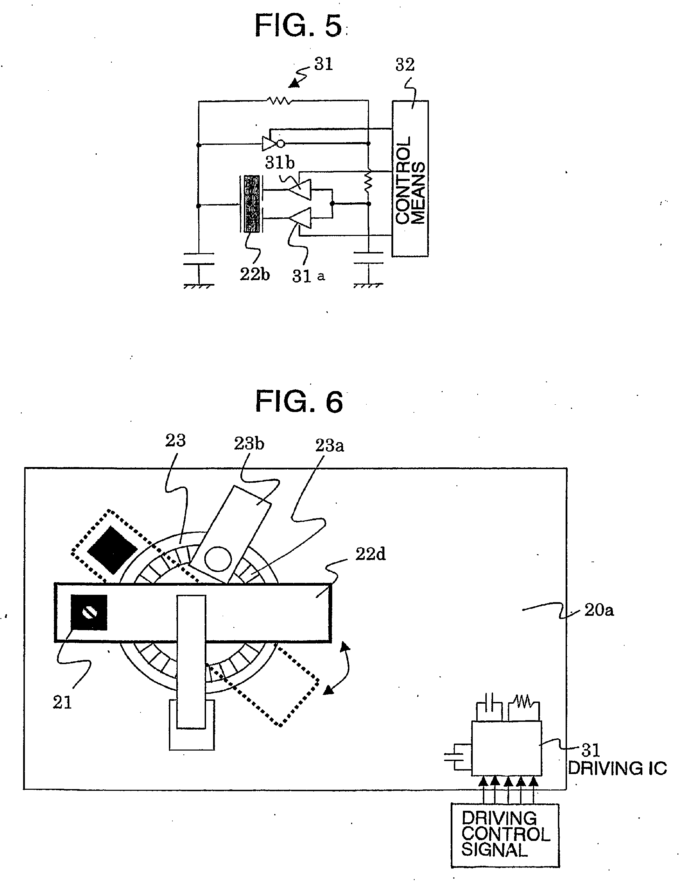

The driving circuit 31 is a well-known self-excited oscillating circuit exemplified in Fig. 5, and amplifies a periodic voltage variation between both faces caused by a piezoelectric vibration of the piezoelectric element 22b, and uses this periodic voltage variation as a driving signal of the piezoelectric element 22b itself. For example, the driving circuit 31 is constructed by an IC, and is attached to a side face of the supporting member 20a, preferably, the side face of the supporting member 20a on the attaching side of the moving optical member 20 with compactness as an object.

The operations of an inverting amplifier 31a and an amplifier 31b within the driving circuit 31 are controlled by the control means 32. Thus, an operation of the piezoelectric actuator 22 is controlled by the control means 32.

The control means 32 rotates and moves each optical element 21 by controlling the operation of the piezoelectric actuator 22. In this case, a new optical element 21 is arranged in the interrupting position of the light beam 100 to shorten a switching time, and the optical element 21 arranged in the interrupting position of the light beam 100 is simultaneously returned until the escaping position.

The control means 32 inputs a preliminary signal to the piezoelectric actuator 22 before the optical element 21 is rotated and moved by mainly driving the piezoelectric actuator 22. Since the preliminary signal is inputted to the piezoelectric actuator 22, the piezoelectric actuator 22 attains a warming-up state and responsibility at an inputting time of a driving signal for the main driving is improved.

The preliminary signal is constructed by a driving signal in a direction opposed to that in the main driving, and a driving signal small to such an extent that no moving body 22d is moved. In the former case, the moving body 22d is pressed against the projection 20b by driving force, and no moving 22d is moved.

In accordance with the optical communication device 1 of the above construction, the optical element 21 arranged in the interrupting position of the light beam 100 can be suitably selected by suitably controlling the operation of each moving optical member 20. Accordingly, an optical filter function of the optical communication device 1 is switched.

Namely, the optical communication device 1 becomes an optical communication device able to switch the wavelength of output light of the output section 40 with good response by using optical filters of plural kinds having different wavelength transmitting characteristics as the optical element 21.

The optical communication device 1 also becomes an optical communication device able to switch the wavelength of light removed from the output light form the output section 40 with good response by using optical filters of plural kinds having different wavelength absorption characteristics as the optical element 21.

The optical communication device 1 also becomes an optical communication device able to change intensity of the output light from the output section 40 with good response by using optical filters of plural kinds having different light absorption rates as the optical element 21.

Further, the optical communication device 1 becomes an optical communication device having a backup function by arranging a plurality of the same optical filters.

Since it is not necessary to use a variable type filter, productivity is improved and cost is reduced.

Further, a control state of the light beam 100 can be maintained without operating the piezoelectric actuator 22 by flowing an electric current through the piezoelectric actuator 22. Accordingly, consumed energy of the optical communication device 1 can be reduced.

### Embodiment 2

An optical communication device 1 in a second embodiment mode of the present invention schematically has a construction similar to that of the optical communication device 1 in the first embodiment mode. However, in the construction of the optical communication device in this second embodiment mode, an encoder 23 is arranged without arranging the projection 20b in the moving optical member 20, and the control means 32 has a function for controlling an operation of the piezoelectric actuator 22 on the basis of detecting results from the encoder 23.

The encoder 23 is constructed by a slit 23a rotated together with the moving body 22d and a well-known rotating amount detector 23b of an optical type for detecting a rotating amount of the slit 23a. Detecting results of the rotating amount detector 23b are transmitted to the control means 32.

In accordance with this embodiment mode, effects similar to those in the first embodiment mode are obtained, and an operation of the moving body 22d can be controlled such that this moving body 22d is set to an arbitrary angle. Further, there is no possibility of defects caused by contact of the projection 20b and the moving body 22d.

### Additional Arrangement 1

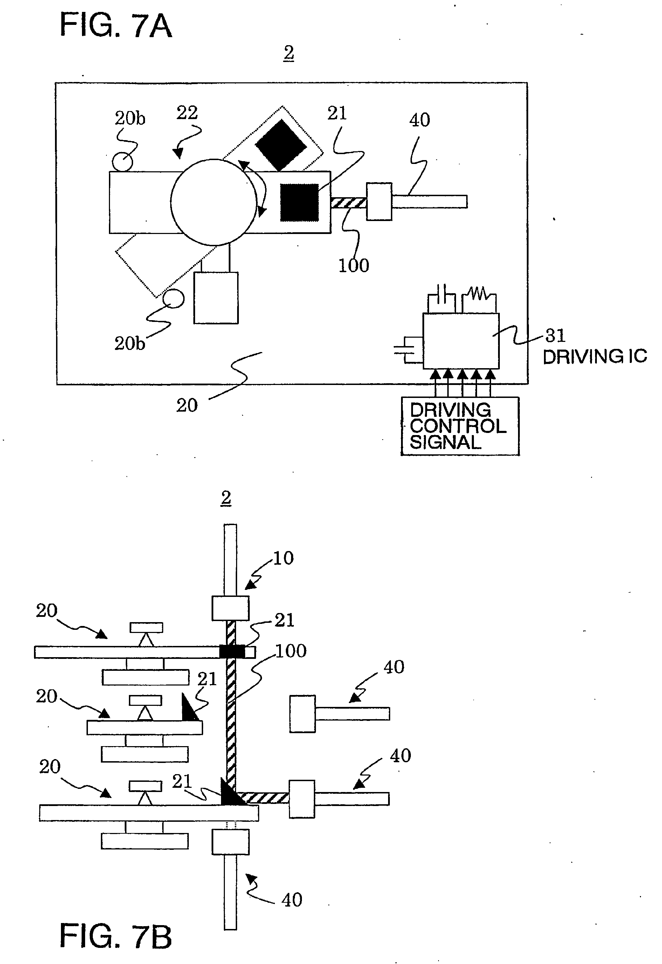

An optical communication device 2, which does not form part of the present invention schematically has a construction similar to that of the optical communication device 1. However, as shown in Figs. 7A and 7B, a reflecting plate or a prism for bending a light beam 100 is adopted as at least one optical element 21 (final two parts in Fig. 7B), and an output section 40 with respect to the light beam 100 bent by the optical element 21 is added.

In accordance with the optical communication device 2, a position of the optical element 21 for bending the light beam 100 is set to an interrupting position of the light beam 100 and is separated from this interrupting position so that the output section 40 for emitting the light beam 100 is switched. Namely, the optical communication device 2 becomes a device of a composite type also having the function of an optical switching device while compactness is maintained.

### Embodiment 3

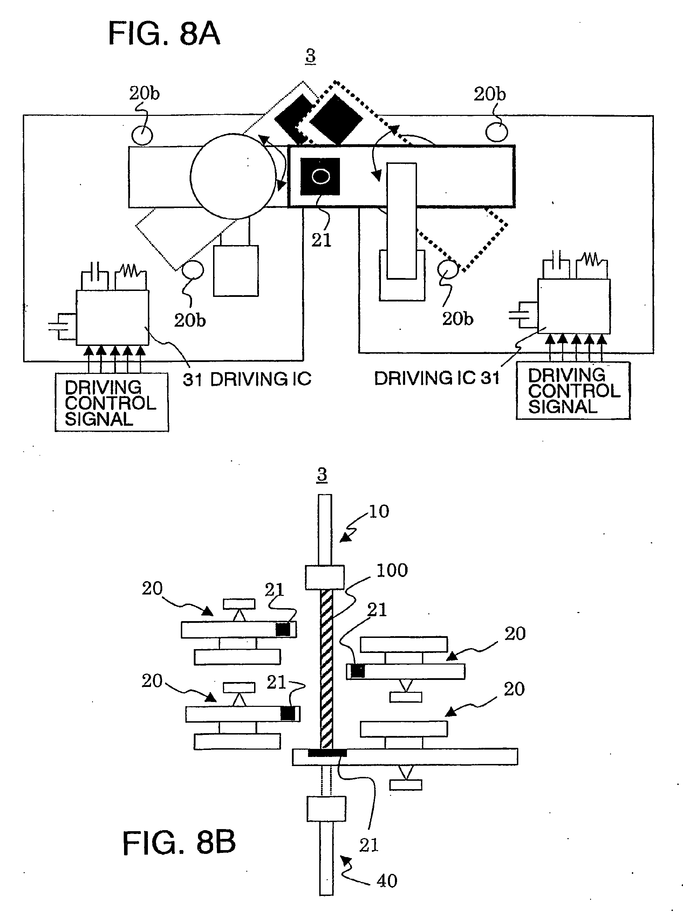

An optical communication device 3 in a third embodiment mode of the present invention schematically has a construction similar to that of the optical communication device 1. However, as shown in Figs. 8A and 8B, a shutter for interrupting the light beam 100 is adopted as at least one optical element 21 (final one part in Fig. 8B).

In accordance with the optical communication device 3, the light beam 100 can be emitted and interrupted by setting the position of the optical element 21 as the shutter to the interrupting position of the light beam 100 and separating the position of the optical element 21 from the interrupting position. Namely, the optical communication device 2 becomes a device of a composite type also having the function of an optical switch while compactness is maintained.

### Additional Arrangement 2

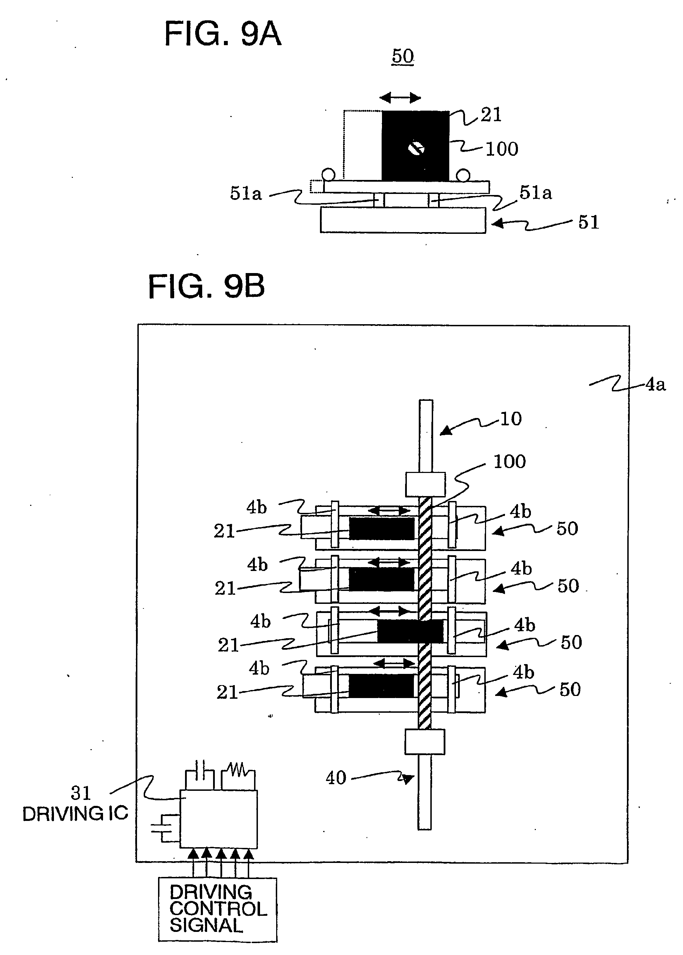

An optical communication device 4, which also does not form part of the present invention schematically has the same construction as the optical communication devices 1 to 3. However, as shown in Fig. 9A, a moving optical number 50 is used instead of the moving optical member 20. Further, the driving circuit 31 is directly arranged on a substrate 4a of the optical communication device 4.

As shown in Fig. 9B, in the moving optical member 50, an optical element 21 is linearly moved by a piezoelectric actuator 51 of a direct acting type in a direction crossing the light beam 100.

The piezoelectric actuator 51 has a rectangular parallelepiped piezoelectric element and a vibrating body, and amplifies a bending vibration caused on an upper face of the above piezoelectric element by the above vibrating body, and outputs the bending vibration as driving force from a projection 51a on the vibrating body.

Here, the optical element 21 is nipped by two stopper members 4b rising on the substrate 4a and can be moved between these stop members 4b.

One stopper member 4b is positioned such that this stopper member 4b abuts on the optical element 21 when the optical element 21 is moved until the interrupting position of the light beam 100. The other stopper member 4b is positioned such that this stopper member 4b abuts on the optical element 21 when the optical element 21 is separated from the interrupting position of the light beam 100.

A preliminary signal provided by the control means 32 becomes a small driving signal in the optical communication devices 1 to 3, and a signal for driving the optical element 21 in an abutting direction on the stopper member 4b.

The optical element 21 is pressed against the above vibrating body by an unillustrated pressurising means.

Namely, the optical communication device 4 obtains effects similar to those of the optical communication devices 1 to 3 by switching the optical element 21 arranged so as to interrupt the light beam 100 by driving the piezoelectric actuator 51.

The present invention is not limited to each of the above embodiment modes. In particular, there is no limit in an optical element applicable as the optical element 21 and its combination, etc. A compact optical communication device of a composite type (or a single function) having a predetermined desirable function is obtained by suitably selecting the optical element and its combination, etc.

It is not necessary to perfectly arrange each moving optical member 20 in series with the light beam 100, but it is sufficient to arrange each moving optical member 20 in a series direction within a range not departing from features of the present invention.

Further, a construction for obtaining a moving amount of each moving body, i.e., position information of the optical element from a consumed power amount and a driving direction of each piezoelectric actuator may be also used.

The optical communication device 1 in the second embodiment mode may have the projection 20b. In this case, the moving body 22d is positioned by the projection 20b, and the position of the moving body 22d is recognised by the encoder 23.

Further, each of concrete constructional elements, etc., can be suitably changed.

As mentioned above, in accordance with the present invention, the optical communication device can be made compact by arranging the optical element in series and in alternating manner with the light beam. Further, a compact optical communication device of a composite type and an optical communication device having a backup function are obtained by suitably changing a combination of respective optical elements.

## Claims

1. An optical communication device comprising:
an optical system for propagating a light beam (100) through a space;
a plurality of optical elements (21) movable to an interrupting position of the light beam within the space, and arranged in a series direction with the light beam;
driving means (22, 31) for separately driving these optical elements; and
driving control means (32) for controlling an operation of this driving means,
**characterised in that**:
at least two different kinds of optical elements are arranged as the optical elements, and
the optical elements are arranged on alternate sides of a path to be traversed by the light beam.

2. An optical communication device according to claim 1, wherein two kinds or more of optical elements having different wavelength transmitting characteristics are included as the optical elements.

3. An optical communication device according to claim 1, wherein two kinds or more of optical elements having different wavelength absorption characteristics are included as the optical elements.

4. An optical communication device according to claim 1, wherein two kinds or more of optical elements having different transmitting light amount characteristics are included as the optical elements.

5. An optical communication device according to claim 1, wherein a shutter is included as at least one of the optical elements.

6. An optical communication device according to claim 1, wherein moving optical members provided by assembling the driving means into the optical elements are arranged in a zigzag shape such that the driving means is located between the same optical elements through the light beam.

7. An optical communication device according to claim 1, wherein the driving means is a piezoelectric actuator.

8. An optical communication device according to claim 7, wherein the piezoelectric actuator comprises a piezoelectric body (22c) for generating a stretching vibration, and a moving body (22d) frictionally driven by the stretching vibration generated in this piezoelectric body.

9. An optical communication device according to claim 7, wherein the piezoelectric actuator is of a rotating type.

10. An optical communication device according to claim 7, wherein the piezoelectric actuator is of a direct acting type.

11. An optical communication device according to claim 7, wherein the driving control means inputs a preliminary signal to the driving means before the driving.

12. An optical communication device according to claim 7, wherein the driving circuit has a self-excited oscillating circuit.

13. An optical communication device according to claim 1, wherein a supporting member (20a) for movably supporting the optical elements is provided, and at least one portion of the driving control means is arranged in this supporting member.

14. A method for controlling an optical communication device, comprising the steps of:
providing an optical system for propagating a light beam (100) through a space;
providing a plurality of optical elements (21), the optical elements being movable to an interrupting position of the light beam within the space and being arranged in series in the direction of propagation of the light beam;
providing driving means (22, 31) for separately driving the optical elements, and
driving, by way of the driving means, one of the optical elements so as to move that optical element to its interrupting position, **characterised in** the steps of:
providing as the plurality of optical elements optical elements of at least two different kinds, the optical elements being arranged on alternate sides of the light beam.

15. A method according to claim 14, wherein more than one optical part is simultaneously driven.

## Patentansprüche

1. Optische Kommunikationseinrichtung, umfassend:
ein optisches System zum Fortpflanzen eines Lichtstrahls (100) durch einen Raum;
eine Mehrzahl optischer Elemente (21), die in eine Unterbrechungsposition des Lichtstrahls in dem Raum bewegbar sind und in einer Serienrichtung mit dem Lichtstrahl angeordnet sind;
ein Antriebsmittel (22, 31) zum separaten Antreiben dieser optischen Elemente; und
ein Antriebssteuerungsmittel (32) zum Steuern eines Betriebs dieses Antriebsmittels, **dadurch gekennzeichnet, dass**:
mindestens zwei Arten von optischen Elementen als optische Elemente angeordnet sind, und
die optischen Elemente an abwechselnden Seiten eines Pfades angeordnet sind, der von dem Lichtstrahl überquert wird.

2. Optische Kommunikationseinrichtung nach Anspruch 1, wobei zwei Arten oder mehr von optischen Elementen mit verschiedenen Wellenlängenübertragungseigenschaften als optische Elemente enthalten sind.

3. Optische Kommunikationseinrichtung nach Anspruch 1, wobei zwei Arten oder mehr von optischen Elementen mit verschiedenen Wellenlängenabsorptionseigenschaften als optische Elemente enthalten sind.

4. Optische Kommunikationseinrichtung nach Anspruch 1, wobei zwei Arten oder mehr von optischen Elementen mit verschiedenen Lichtmengendurchlasseigenschaften als optische Elemente enthalten sind.

5. Optische Kommunikationseinrichtung nach Anspruch 1, wobei eine Blende als mindestens eines der optischen Elemente enthalten ist.

6. Optische Kommunikationseinrichtung nach Anspruch 1, wobei bewegliche optische Elemente, die durch Einbauen des Antriebsmittels in die optischen Elemente bereitgestellt sind, zickzackförmig angeordnet sind, so dass das Antriebsmittel zwischen denselben optischen Elementen durch den Lichtstrahl positioniert ist.

7. Optische Kommunikationseinrichtung nach Anspruch 1, wobei das Antriebsmittel ein piezoelektrisches Stellglied ist.

8. Optische Kommunikationseinrichtung nach Anspruch 7, wobei das piezoelektrische Stellglied einen piezoelektrischen Körper (22c) zum Erzeugen einer dehnenden Vibration umfasst, und einen beweglichen Körper (22d), der reibschlüssig durch die dehnende Vibration angetrieben wird, die in diesem piezoelektrischen Körper erzeugt wird.

9. Optische Kommunikationseinrichtung nach Anspruch 7, wobei das piezoelektrische Stellglied von einer rotierenden Art ist.

10. Optische Kommunikationseinrichtung nach Anspruch 7, wobei das piezoelektrische Stellglied von einer direkt wirkenden Art ist.

11. Optische Kommunikationseinrichtung nach Anspruch 7, wobei das Antriebssteuermittel ein Vorabsignal an das Antriebsmittel vor dem Antrieb eingibt.

12. Optische Kommunikationseinrichtung nach Anspruch 7, wobei die Antriebsschaltung eine selbsterregende oszillierende Schaltung aufweist.

13. Optische Kommunikationseinrichtung nach Anspruch 1, wobei ein Stützelement (20a) zum beweglichen Stützen der optischen Elemente bereitgestellt ist, und mindestens ein Abschnitt des Antriebssteuermittels in diesem Stützelement angeordnet ist.

14. Verfahren zum Steuern einer optischen Kommunikationseinrichtung, umfassend die folgenden Schritte:
Bereitstellen eines optischen Systems zum Fortpflanzen eines Lichtstrahls (100) durch einen Raum;
Bereitstellen einer Mehrzahl optischer Elemente (21), wobei die optischen Elemente in eine Unterbrechungsposition des Lichtstrahls in dem Raum bewegbar sind und der Reihe nach in die Fortpflanzungsrichtung des Lichtstrahls angeordnet sind;
Bereitstellen eines Antriebsmittels (22, 31) zum separaten Antreiben der optischen Elemente, und
Antreiben, mit Hilfe des Antriebssteuermittels, eines der optischen Elemente, so dass dieses optische Element in seine Unterbrechungsposition bewegt wird, **gekennzeichnet durch** folgende Schritte:
Bereitstellen von mindestens zwei verschiedenen Arten von optischen Elemente als die Mehrzahl von optischen Elementen, wobei die optischen Elemente an abwechselnden Seiten des Lichtstrahls angeordnet sind.

15. Verfahren nach Anspruch 14, wobei mehr als ein optisches Teil gleichzeitig angetrieben wird.

## Revendications

1. Dispositif de communication optique comprenant :
un système optique pour propager un faisceau lumineux (100) dans un espace ;
une pluralité d'éléments optiques (21) pouvant être amenés jusqu'à une position d'interruption du faisceau lumineux dans l'espace et disposés dans une direction de série avec le faisceau lumineux ;
un moyen moteur (22, 31) pour entraîner séparément ces éléments optiques ; et
un moyen de contrôle de commande (32) pour contrôler un fonctionnement de ce moyen moteur,
**caractérisé en ce que**
au moins deux types différents d'éléments optiques sont disposés en tant qu'éléments optiques et que
les éléments optiques sont disposés sur des côtés alternés d'un parcours devant être traversé par le faisceau lumineux.

2. Dispositif de communication optique selon la revendication 1, dans lequel deux sortes ou plus d'éléments optiques ayant des caractéristiques différentes de transmission de longueur d'onde sont intégrés en tant qu'éléments optiques.

3. Dispositif de communication optique selon la revendication 1, dans lequel deux sortes ou plus d'éléments optiques ayant des caractéristiques différentes d'absorption de longueur d'onde sont intégrés en tant qu'éléments optiques.

4. Dispositif de communication optique selon la revendication 1, dans lequel deux sortes ou plus d'éléments optiques ayant des caractéristiques différentes de quantité de lumière de transmission sont intégrés en tant qu'éléments optiques.

5. Dispositif de communication optique selon la revendication 1, dans lequel un volet est intégré en tant qu'au moins un des éléments optiques.

6. Dispositif de communication optique selon la revendication 1, dans lequel des éléments optiques créés en assemblant le moyen moteur dans les éléments optiques sont disposés en forme de zigzag, de sorte que le moyen optique est placé entre les mêmes éléments optiques dans le faisceau lumineux.

7. Dispositif de communication optique selon la revendication 1, dans lequel le moyen moteur est un actionneur piézoélectrique.

8. Dispositif de communication optique selon la revendication 7, dans lequel l'actionneur piézoélectrique comprend un corps piézoélectrique (22c) pour générer une vibration d'étirement et un corps en mouvement (22d) entraîné par friction par la vibration d'étirement générée dans ce corps piézoléctrique.

9. Dispositif de communication optique selon la revendication 7, dans lequel l'actionneur piézoélectrique est de type rotatif.

10. Dispositif de communication optique selon la revendication 7, dans lequel l'actionneur piézoélectrique est de type à action directe.

11. Dispositif de communication optique selon la revendication 7, dans lequel le moyen de contrôle de commande rentre un signal préliminaire dans le moyen moteur avant l'entraînement.

12. Dispositif de communication optique selon la revendication 7, dans lequel le circuit moteur comporte un circuit oscillant auto-excité.

13. Dispositif de communication optique selon la revendication 1, dans lequel un élément de soutien (20a) servant à soutenir de manière mobile les éléments optiques est prévu et qu'au moins une section du moyen de contrôle de commande est disposée dans cet élément de soutien.

14. Procédé de contrôle d'un dispositif de communication optique, comprenant les étapes de :
mise en place d'un système optique pour propager un faisceau lumineux (100) dans un espace ;
mise en place d'une pluralité d'éléments optiques (21), les éléments optiques pouvant être amenés jusqu'à une position d'interruption du faisceau lumineux dans l'espace et étant disposés en série dans la direction de propagation du faisceau lumineux ;
mise en place d'un moyen moteur (22, 31) pour entraîner séparément les éléments optiques et
entraîner, à l'aide du moyen moteur, un des éléments optiques de manière à amener cet élément optique à sa position d'interruption, **caractérisé par** les étapes de :
mise en place en tant que pluralité d'éléments optiques d'au moins deux types différents, les éléments optiques étant disposés sur des côtés alternés du faisceau lumineux.

15. Procédé selon la revendication 14, dans lequel plus d'une pièce optique est entraînée simultanément.
